# EUROPEAN PATENT APPLICATION

(11) **EP 4 672 102 A1**
(43) Date of publication of application: **31.12.2025**
(21) Application number: 24760099.2
(22) Date of filing: 05.02.2024
(51) Int. Cl.: G06Q 10/04, G06Q 30/0242

(54) **INFORMATION PROCESSING DEVICE, INFORMATION PROCESSING METHOD, AND INFORMATION PROCESSING PROGRAM**

(30) Priority: 22.02.2023 JP 2023026019
(71) Applicant: DENTSU INC., Tokyo 105-7001 (JP)
(72) Inventor: PARK Tae Hwi, Tokyo 105-7001 (JP); MATSUTOMO Takayuki, Tokyo 105-7001 (JP); TAKANISHI Hiroaki, Tokyo 105-7001 (JP); YOSHIMURA Mika, Tokyo 105-7001 (JP)
(74) Representative: SSM Sandmair
(86) International application number: PCT/JP2024/003654
(87) International publication number: WO 2024/176793

(57) **Abstract**

An information processing apparatus, an information processing method, and an information processing program capable of acquiring the scale of the number of persons who contact information (reach) with high accuracy and a small processing load (for example, arithmetic operation amount) are provided. An information processing apparatus (1) includes: an individual reach acquisition unit (10) that acquires a first reach that is a scale of the number of persons who contact first information, a second reach that is a scale of the number of persons who contact second information,... and an N-th reach that is a scale of the number of persons who contact N-th information, when N is defined as a natural number of three or more; and a total reach acquisition unit (20) that acquires a total reach that is a union of the first reach, the second reach,... and the N-th reach, wherein the total reach acquisition unit (20) considers a component in which two of the first to N-th reaches have an overlapping relationship, while ignoring a component in which three or more reaches have an overlapping relationship, as an incremental reach that is a scale of the number of persons who do not contact one information and contact the other information.

## Description

### Technical Field

The present disclosure relates to an information processing apparatus, an information processing method, and an information processing program.

### Background Art

It is already well known to survey the scale (reach) of the number of persons who contact various types of information including a television commercial, radio commercial, digital advertisement, and the like, and various survey methods are also known (for example, see Patent Literatures 1-4).

### Citation List

### Patent Literature

Patent Literature 1: JP 2018-028859 A
Patent Literature 2: JP 2020-161037 A
Patent Literature 3: JP 2021-157567 A
Patent Literature 4: JP 2022-156971 A

### Summary of Invention

### Technical Problem

However, the prior arts including Patent Literatures 1-4 have room for improvement from the viewpoint of acquiring the scale of the number of persons who contact information (reach) with high accuracy and a small processing load (for example, arithmetic operation amount).

Therefore, one of objects of the present disclosure is to provide an information processing apparatus, an information processing method, and an information processing program capable of acquiring the scale of the number of persons who contact information (reach) with high accuracy and a small processing load (for example, arithmetic operation amount).

### Solution to Problem

An information processing apparatus according to an aspect of the present disclosure includes: an individual reach acquisition unit that acquires a first reach that is a scale of the number of persons who contact first information, a second reach that is a scale of the number of persons who contact second information,... and an N-th reach that is a scale of the number of persons who contact N-th information, where N is defined as a natural number of three or more; and a total reach acquisition unit that acquires a total reach that is a union of the first reach, the second reach,... and the N-th reach, in which the total reach acquisition unit considers a component in which two of the first to N-th reaches have an overlapping relationship, while ignoring a component in which three or more reaches have an overlapping relationship, as an incremental reach that is a scale of the number of persons who do not contact one information and contact the other information.

### Advantageous Effects of Invention

According to one aspect of the present disclosure, it is possible to provide an information processing apparatus, an information processing method, and an information processing program capable of acquiring the scale of the number of persons who contact information (reach) with high accuracy and a small processing load (for example, arithmetic operation amount).

### Brief Description of Drawings

Fig. 1 is a first schematic diagram illustrating a reach that is the scale of the number of persons who contact information.
Fig.2 is a second schematic diagram illustrating the reach that is the scale of the number of persons who contact information.
Fig. 3 is a third schematic diagram illustrating the reach that is the scale of the number of persons who contact information.
Fig. 4 is a diagram illustrating examples of calculation formulae in a case of obtaining total reaches of one to five reaches corresponding to one to five pieces of information.
Fig. 5 is a diagram illustrating an example of a method of setting a predicted overlap coefficient.
Fig. 6 is a block diagram illustrating an example of a configuration of an information processing apparatus.
Fig. 7 is a diagram illustrating an example of a schematic configuration of a system including the information processing apparatus.
Fig. 8 is a diagram illustrating an example of a functional configuration of the information processing apparatus.
Fig. 9 is a diagram illustrating an example of a hardware configuration of the information processing apparatus.

### Description of Embodiments

An information processing apparatus, an information processing method, and an information processing program of the present disclosure acquire a total reach that is a union of a first reach that is the scale of the number of persons who contact first information, a second reach that is the scale of the number of persons who contact second information, ... and an N-th reach that is the scale of the number of persons who contact N-th information, where N is defined as a natural number of three or more.

The information processing apparatus includes not only one apparatus that independently exhibits a specific function but also a plurality of apparatuses that exist in a distributed manner but cooperate to exhibit the specific function. In addition, the information processing method and the information processing program are implemented when a computer (Central Processing Unit) included in the information processing apparatus executes various processing steps.

In the present disclosure, "information" including the first information, the second information,... and the N-th information means various types of information including a television commercial, radio commercial, digital advertisement, and the like.

In the present disclosure, "people" or a "person" is a concept including not only an individual but also a group to which the individual belongs (for example, household).

In the present disclosure, an "information communication network" is a general term for communication networks for transmitting (distributing) digital data to the public, such as the Internet and mobile communication networks.

In the present disclosure, the "television commercial" and "radio commercial" include not only advertisement information distributed by radio wave broadcasting or data broadcasting but also advertisement information broadcast by an Internet television, IP simul radio, or the like.

In the present disclosure, a "digital advertisement" is advertisement information distributed through the information communication network, such as a web advertisement, includes websites that post information regarding products or services to be advertised, includes advertisements posted on portal sites, social network service (SNS) sites, video sites, or the like, for example, targeting advertisements, ad network advertisements, and demand-side platform (DSP) advertisements whose contents change depending on site users (viewers), and further includes banner advertisements. In addition, the "digital advertisement" includes advertisements displayed with a browser and also includes advertisements displayed by activating mobile applications (so-called "apps").

In the present disclosure, "contact" is an action of contacting information, and it does not matter whether or not the information is perceived/recognized. In addition, the contact includes viewing of the television, listening to the radio, use (browsing) of a website, use (browsing) of a dedicated site through a mobile application, subscribing to a newspaper, a magazine, or the like, and viewing of an advertisement or the like displayed outdoors or in a public institution. In addition, "viewing" includes not only viewing broadcast programs and advertisements in real time, but also so-called time shift viewing in which people view programs and advertisements by recording and reproducing them within a certain period of time after broadcasting, or people view programs and advertisements distributed on the web.

In the present disclosure, "reaching" includes the above-described "contact", and also includes physical reach to a certain place/position (specifically, for example, to a place where the information posting medium is installed, and the like), and transition or transfer to a certain state (specifically, for example, to a state in which the information posting medium is possessed or used in a specific mode, and the like).

In the present disclosure, a survey regarding the scale of the number of persons who contact each of the first information, the second information,... and the N-th information is conducted, and data indicating the survey result is acquired. Here, the first information, the second information, ... and the N-th information may be information in different distribution forms. More specifically, one of the first information, the second information, ... and the N-th information may be information (content) broadcast on television, and the other information may be information distributed via the information communication network.

In the present disclosure, the first information, the second information, ... and the N-th information may be advertisement information regarding the same or different products or services. That is, one of the first information, the second information, ... and the N-th information may be a television commercial regarding a certain product or service, the other information may be a digital advertisement regarding the same or different product or service (information distributed via the information communication network), and the one information and the other information may be information in different distribution forms.

In addition, the distribution form of the first information, the second information,... and the N-th information is not limited to a television, the web, and the like, and may be broadcast by radio, may be displayed on an information display device installed outdoors such as a digital signage, may be displayed on an information display installed in the front of stores or the like, may be displayed on an outdoor signboard, or may be displayed on a paper surface of a newspaper, a magazine, or the like.

Furthermore, the content represented by the first information, the second information, ... and the N-th information is not limited to the advertisement, and may be a content other than the advertisement (for example, news, article, program, or the like).

In the present disclosure, the "scale of the number of persons who contact" means a reach, and specifically, means a ratio of the number of persons who have contacted the first information, the second information,... and the N-th information, to the number of persons in the population in each survey. However, the "scale of the number of persons who contact" is not limited to it, and the absolute number of persons who contact the first information, the second information, ... and the N-th information may be used as the "scale of the number of persons who contact (reach)".

When at least one information included in the first information, the second information, ... and the N-th information is a television commercial regarding a certain product or service, a survey regarding the scale of the number of persons who contact the television commercial is a survey of a television viewing status. This survey is conducted, for example, by a research company that surveys a television viewing rate in each time zone of each day. Specifically, a panel randomly selected from a set population according to a statistical method is targeted, and the television viewing status of each panel is surveyed by a mechanical method. More specifically, a known measuring device for measuring a television viewing time, viewing channel, and the like is installed in each panel's house. The television viewing status of each panel is surveyed by the measuring device every day during a survey period.

The above-described measuring device generates data indicating measurement results at regular intervals (for example, every minute), and transmits the data to a survey conductor. The survey conductor collects the data transmitted from the measuring device of each panel through a dedicated communication line. As a result, the survey conductor acquires data indicating the television viewing status and corresponding to the number of panels. In addition, the survey conductor accumulates the data acquired from each panel in a database. Then, the survey conductor analyzes the data collected from each panel, and identifies the viewing rate as the reach for a program or a television commercial broadcast by a predetermined television station in a predetermined time zone. For example, the survey conductor uses a time zone and a television station in which the television commercial regarding the certain product or service is broadcast as input information, and identifies the viewing rate of the television commercial based on the accumulated data. In this sense, the data can be said to be data collected to identify the viewing rate (reach) of a predetermined television commercial.

Note that the transmission of the data from the measuring device installed in each panel's house may be performed in minutes, or data for one hour or data for one day may be collectively transmitted. Although it is described herein that the data is transmitted from the measuring device through the communication line, the present invention is not limited thereto. For example, data indicating the television viewing status of each panel may be acquired when each panel fills out a predetermined entry form with the television viewing status (specifically, the viewing time or the like for each television station in each time zone), and the survey conductor collects the form that has been filled out from each panel, and inputs the entry content of the collected form. Alternatively, for example, a device log accumulated in a television receiver when each panel views television, or a viewing log transmitted from the television receiver to the television broadcasting station side via the Internet may be acquired as the data.

When at least one information included in the first information, the second information, ... and the N-th information is a digital advertisement regarding a certain product or service, a survey regarding the scale of the number of persons who contact the digital advertisement is an effect measurement survey of the digital advertisement. This survey is conducted, for example, by a research company that surveys a contact status with various web advertisements. More specifically, the effect measurement survey of the digital advertisement is conducted using a tag manager used in conversion measurement or the like, a tracking tag is embedded in advance in the digital advertisement specified as the survey target, and when a viewer browses the digital advertisement through a browser or an app, information regarding the viewer, a browsing date and time, and the like are identified. Data indicating the identification result is collected by the survey conductor, and the survey conductor accumulates data corresponding to the number of viewers of the digital advertisement in a database. Then, the survey conductor analyzes the data collected for the digital advertisement specified as the survey target, and identifies the browsing rate as the reach for the digital advertisement. For example, the survey conductor identifies the number of viewers of the digital advertisement regarding the certain product or service from the accumulated data, and identifies the browsing rate from the identified number of viewers. In this sense, the data can be said to be data collected to identify the browsing rate (reach) for the predetermined digital advertisement.

The digital advertisement effect measurement survey conductor and the television viewing status survey conductor may mutually transmit and receive the browsing rate (reach) for the digital advertisement and the viewing rate (reach) of the television commercial. When the same digital advertisement is posted on a plurality of websites (information posting media), the browsing rate of the digital advertisement may be identified for each website (each information posting medium). In such a case, the data is collected for the purpose of identifying the browsing rate for each website.

Note that the company that conducts the survey on the scale of the number of persons who contact the television commercial and the company that conducts the survey on the scale of the number of persons who contact the digital advertisement may be the same or different from each other.

In addition, in the present disclosure, separately from the above two surveys (the survey on the digital advertisement effect measurement and the survey on the TV viewing status), a survey regarding a contact status of a plurality of media (another survey) may be conducted for a plurality of targets. This survey may be a survey for grasping, for each target, a contact status with the television commercial and the frequency of reach to the information posting medium. The information posting medium is, for example, a medium on which posted information including a digital advertisement is posted, and is assumed herein to be a predetermined website (specifically, the portal site, video site, SNS site, and the like). On the information posting medium, the posted information whose content changes depending on a person who reaches the information posting medium (site viewer) is displayed. An example of the posted information includes an advertisement whose content changes depending on the site viewer (so-called the targeting advertisement).

Note that the information posting medium is not limited to the website, and may be, for example, the information display device installed outdoors such as the digital signage, the information display installed in the front of stores or the like, the outdoor signboard, the newspaper or magazine (including an electronic version thereof), a broadcast medium such as the radio, or the like. In addition, a web service page displayed on a mobile screen by activating the app is also the information posting medium. Furthermore, the posted information posted on the information posting medium is not limited to the targeting advertisement whose content changes depending on a user, and may be, for example, a pure advertisement (the banner advertisement or the like) that is commonly distributed regardless of the person who reaches the information posting medium.

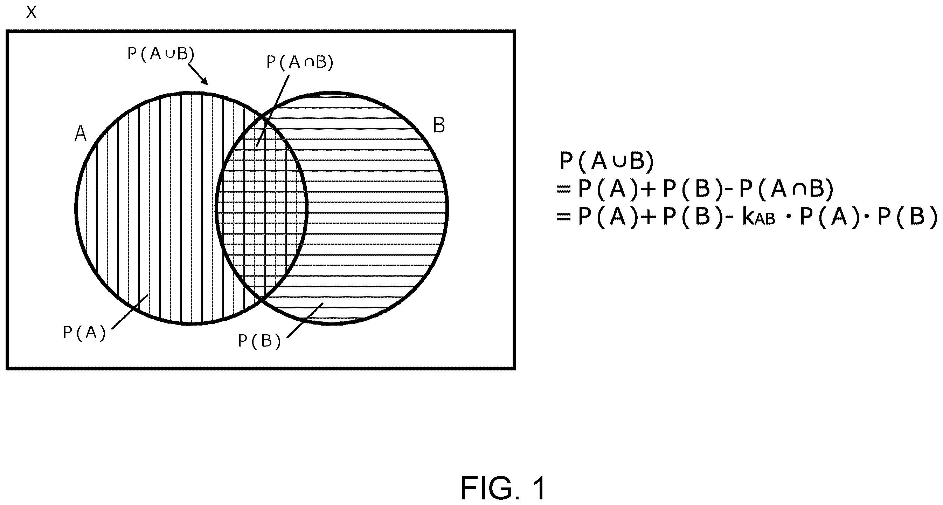

Fig. 1 is a first schematic diagram illustrating the reach that is the scale of the number of persons who contact information. Hereinafter, a case where a television commercial for a certain product X is information A and a digital advertisement for the same product X is information B will be described as a specific example.

A reach for the information A that is the television commercial of the product X, that is, a reach A can be identified from the data acquired through conducting the survey of the television viewing status. Specifically, a value obtained by dividing the number of panels who have viewed the television commercial of the product X by the number of all the panels is the reach A for the television commercial. Here, when an event that a person has viewed the television commercial of the product X is an event A, the reach A is expressed as P (A) as illustrated in Fig. 1. Fig. 1 is a schematic diagram illustrating various reaches (more specifically, a Venn diagram).

A reach for a digital advertisement of the product X, that is, a reach B can be identified from the data acquired through conducting the digital advertisement effect measurement survey. Specifically, a value obtained by dividing the number of viewers of the digital advertisement of the product X by the total population of Japan or the number of Internet users is the reach B for the digital advertisement. Here, when an event that a person has browsed the digital advertisement of the product X is an event B, the reach B is expressed as P (B) as illustrated in Fig. 1.

As described above, the reach P (A) and the reach P (B) can be individually identified. On the other hand, in order to confirm the effect of the advertisement of the product X (for example, recognition of the product X), it is necessary to identify the scale of the number of persons who contact at least one of the television commercial and the digital advertisement of the product X, that is, the total reach. Here, the total reach is expressed as a union P (AUB) of the reach P (A) and the reach P (B) as illustrated in Fig. 1.

To identify the total reach P (AUB), for example, it is necessary to obtain the scale of the number of persons who contact both the television commercial and the digital advertisement of the product X. This scale is a reach corresponding to a product set P (A∩B) of the reach P (A) and the reach P (B), and is hereinafter also referred to as an intersection reach (overlap reach) P (A∩B). Although not illustrated in Fig. 1, a set obtained by subtracting the intersection reach P (A∩B) from the reach P (A) may be expressed as a reach P (A∩B^{C}), and a set obtained by subtracting the intersection reach P (A∩B) from the reach P (B) may be expressed as a reach P (A^{C}∩B).

As illustrated in Fig. 1, the total reach P (AUB) is defined as a set obtained by subtracting the intersection reach P (A∩B) from the sum of the reach P (A) and the reach P (B). In addition, the intersection reach P (A∩B) is defined as a value obtained by multiplying the reach P (A), the reach P (B), and a predetermined overlap coefficient K_{AB}. How to set the overlap coefficient K_{AB} will be described in detail later.

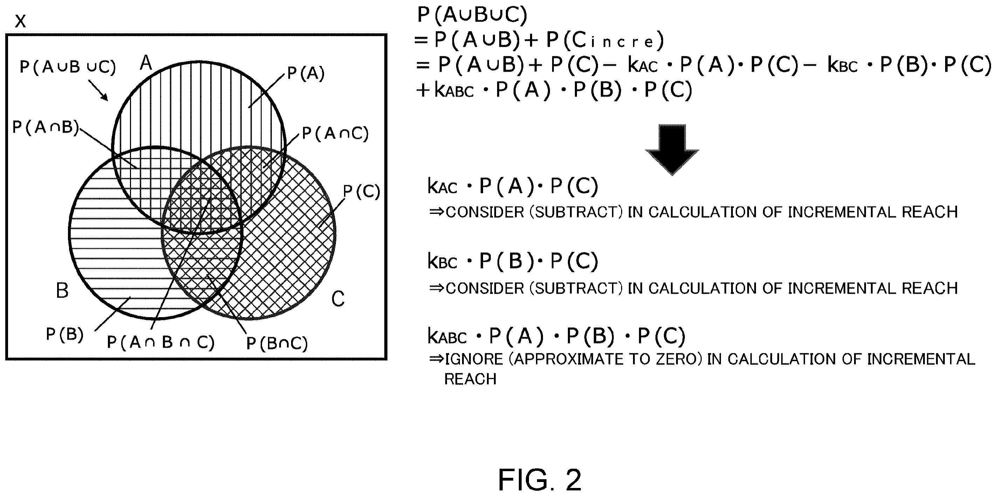

Fig. 2 is a second schematic diagram illustrating the reach that is the scale of the number of persons who contact information. Hereinafter, a case where the television commercial for the certain product X is information A, the digital advertisement for the same product X is information B, and a radio commercial for the same product X is information C will be described as a specific example. A reach for the information C that is the radio commercial of the product X, that is, a reach C can be identified from data acquired through conducting a survey of a radio listening status.

In the example of Fig. 2, when the scale of the number of persons who contact at least one of the television commercial, the digital advertisement, and the radio commercial of the product X, that is, the total reach is identified, the total reach is expressed as a union P (AUBUC) of the reach P (A), the reach P (B), and the reach P (C) as illustrated in Fig. 2.

The total reach P (AUBUC) is obtained by adding an incremental reach P (C_{incre}) for the information C, which is the scale of the number of persons who do not contact the information A and the information B but contact the information C, to the total reach P (AUB) obtained in Fig. 1. The incremental reach P (C_{incre}) is obtained by subtracting a value obtained by multiplying the reach P (A), the reach P (C), and the predetermined overlap coefficient K_{AC} from the reach P (C), subtracting a value obtained by multiplying the reach P (B), the reach P (C), and the predetermined overlap coefficient K_{BC} from the reach P (C), and further adding a value obtained by multiplying the reach P (A), the reach P (B), the reach P (C), and the predetermined overlap coefficient K_{ABC}. How to set the overlap coefficients K_{AC} and K_{BC} will be described in detail later.

In Fig. 2, a portion overlapping all of the reach P (A), the reach P (B), and the reach P (C) is indicated by the intersection reach P (A∩B∩C). Although not illustrated in Fig. 2, a set obtained by subtracting the intersection reach P (A∩B∩C) from the intersection reach P (A∩B) may be expressed by a reach P (A∩B∩C^{C}), a set obtained by subtracting the intersection reach P (A∩B∩C) from the intersection reach P (A∩C) may be expressed by a reach P (A∩B^{C}∩C), and a set obtained by subtracting the intersection reach P (A∩B∩C) from the intersection reach P (B∩C) may be expressed by a reach P (A^{C}∩B∩C). Furthermore, a set obtained by subtracting the intersection reach P (A∩B∩C), the reach P (A∩B∩C^{C}), and the reach P (A∩B^{C}∩C) from the reach P (A) may be expressed as a reach P (A∩B^{C}∩C^{C}), a set obtained by subtracting the intersection reach P (A∩B∩C), the reach P (A^{C}∩B∩C), and the reach P (A∩B∩C^{c}) from the reach P (B) may be expressed as the reach P (A^{C}∩B∩C^{C}), and a set obtained by subtracting the intersection reach P (A∩B∩C), the reach P (A^{C}∩B∩C), and the reach P (A∩B^{C}∩C) from the reach P (C) may be expressed as a reach P (A^{C}∩B^{C}∩C).

As a result of intensive research, the present inventor has focused on the fact that, when the total reach is acquired (calculated), and the number of pieces of target information (overlapping information) is increased to three or more, in the acquisition (calculation) of the incremental reach, the component in which two reaches are in the overlapping relationship has a large influence on the accuracy of the total reach while the processing load (for example, the arithmetic operation amount) is small, and the component in which three or more reaches are in the overlapping relationship has a small influence on the accuracy of the total reach while the processing load (for example, the arithmetic operation amount) is large.

Then, the present inventor has conceived an information processing apparatus, an information processing method, and an information processing program including the following configurations (1), (2), and (3). This makes it possible to acquire the scale of the number of persons who contact information (reach) with high accuracy and a small processing load (for example, arithmetic operation amount).
(1) Acquire the first reach that is the scale of the number of persons who contact the first information, the second reach that is the scale of the number of persons who contact the second information, ... and the N-th reach that is the scale of the number of persons who contact the N-th information, where N is defined as a natural number of three or more.
(2) Acquire the total reach that is the union of the first reach, the second reach,... and the N-th reach.
(3) When acquiring the total reach, consider (subtract) the component in which two of the first to N-th reaches have the overlapping relationship, while ignoring (approximating to zero) the component in which three or more reaches have the overlapping relationship, as the incremental reach that is the scale of the number of persons who do not contact one information and contact the other information.

When the above-described configuration requirements are applied to Fig. 2, in acquiring the total reach, the components in which the two reaches of the reach P (A), the reach P (B), and the reach P (C) have the overlapping relationship, that is, a value (K_{AC}·P (A)·P(C)) obtained by multiplying the reach P (A), the reach P (C), and the predetermined overlap coefficient K_{AC} and a value (K_{BC}·P (B)·P(C)) obtained by multiplying the reach P (B), the reach P (C), and the predetermined overlap coefficient K_{BC} are taken into consideration and subtracted as the incremental reach. On the other hand, the component in which the three reaches of the reach P (A), the reach P (B), and the reach P (C) have the overlapping relationship, that is, a value (K_{ABC} · P (A) ·P (B) ·P (C)) obtained by multiplying the reach P (A), the reach P (B), the reach P (C), and the predetermined overlap coefficient K_{ABC} is ignored and approximated to zero.

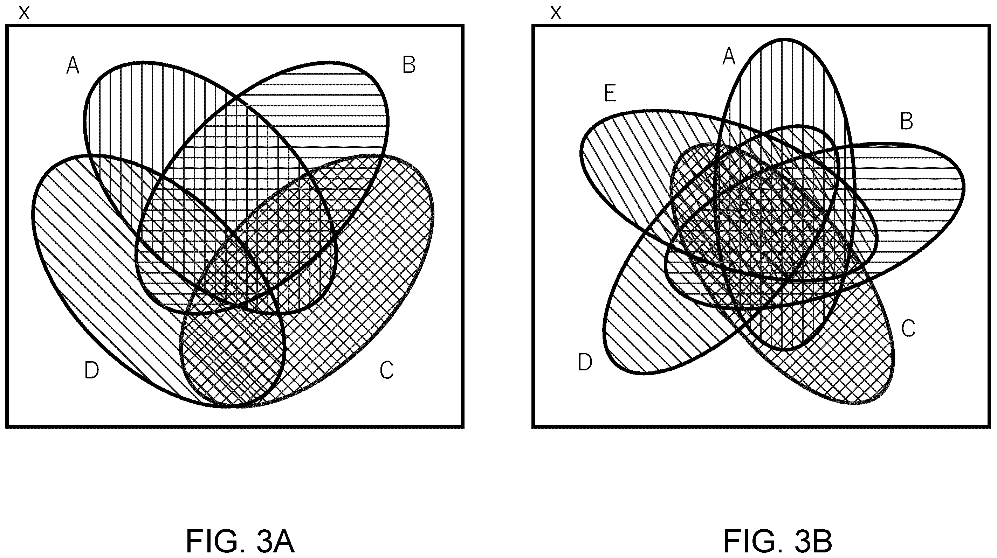

Figs. 3A and 3B are third schematic diagrams illustrating the reach that is the scale of the number of persons who contact information. Fig. 3A illustrates a case of obtaining a total reach P (AUBUCUD) of four reaches A, B, C, and D corresponding to four pieces of information A, B, C, and D, and Fig. 3B illustrates a case of obtaining a total reach P (AUBUCUDUE) of five reaches A, B, C, D, and E corresponding to five pieces of information A, B, C, D, and E.

In both of Figs. 3A and 3B, when acquiring the total reach, only the components in which two reaches have the overlapping relationship are taken into consideration and subtracted as the incremental reach. On the other hand, the components in which three, four, or five reaches have the overlapping relationship are ignored and approximated to zero.

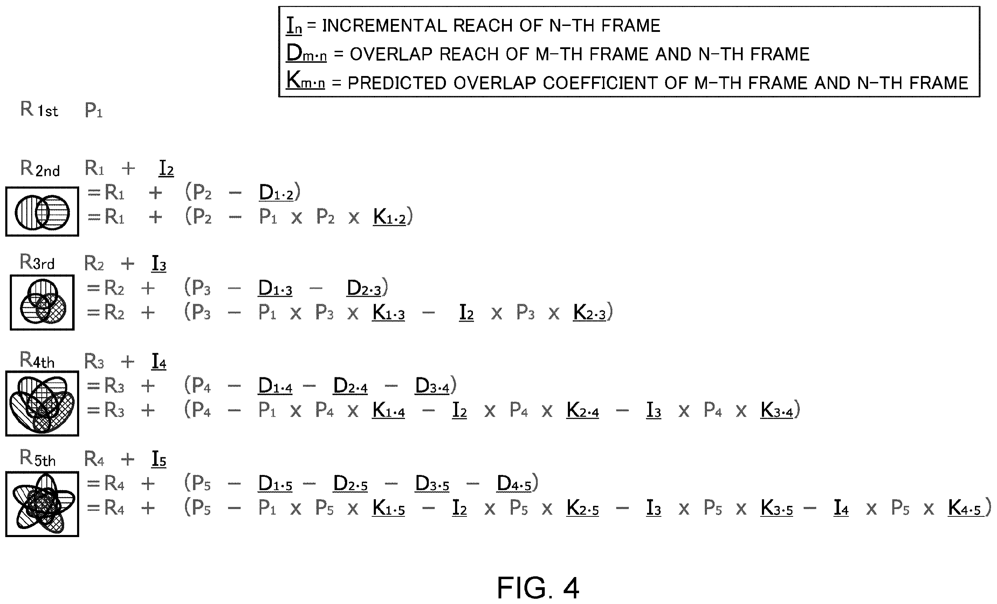

Fig. 4 is a diagram illustrating examples of calculation formulae in a case of obtaining the total reaches of one to five reaches corresponding to one to five pieces of information. In Fig. 4, R₁ to R₅ indicate the total reaches of first to fifth frames. P₁ to P₅ indicate the reaches of the first to fifth frames before the overlap is subtracted. Iₙ indicates the incremental reach of an N-th frame. D_{m·n} indicates the overlap reach of an M-th frame and the N-th frame. K_{m·n} indicates a predicted overlap coefficient of the M-th and N-th frames, and a predicted overlap coefficient K_{m·n (NEW)} to be described later is actually applied. m and n are constituted by a combination of two non-overlapping natural numbers of 1 to 5.

In this manner, as a component in which an m-th reach Pₘ and an n-th reach Pₙ that are a combination of any two of the reaches of the first to fifth frames have the overlapping relationship, a value obtained by multiplying the m-th reach Pₘ, the n-th reach Pₙ, and the predicted overlap coefficient K_{m·n} (K_{m·n (NEW)}) uniquely set for each combination of the m-th reach Pₘ and the n-th reach Pₙ is calculated, and this value is taken into consideration and subtracted in the calculation of the incremental reach. Specifically, in the calculation of the total reach R₂ of the second frame, the component of "P₁ ×P₂×K_{1·2}" is taken into consideration and subtracted. In the calculation of the total reach R₃ of the third frame, the components of "P₁ ×P₃×K_{1·3}" and "I₂ ×P₃×K_{2·3}" are taken into consideration and subtracted. In the calculation of the total reach R₄ of the fourth frame, the components of "P₁×P₄×K_{1·4}" "I₂×P₄×K_{2·4}", and "I₃×P₄×K_{3·4}" are taken into consideration and subtracted. In the calculation of the total reach R₅ of the fifth frame, the components of "P₁×P₃×K_{1·5}", "I₂×P₅×K_{2·5}", "1₃×P₅×K_{3·5}", and "I₄×P₅×K_{4·5}" are taken into consideration and subtracted.

In this manner, when calculating (acquiring) the total reaches R₁ to R₃ of the first to fifth frames, only the components in which two of the reaches P₁ to P₅ of the first to fifth frames have the overlapping relationship are taken into consideration and subtracted as the incremental reach. On the other hand, the components in which three or more of the reaches P₁ to P₅ of the first to fifth frames have the overlapping relationship are ignored and approximated to zero. If the calculation is performed in consideration of the components in which three or more of the reaches P₁ to P₅ of the first to fifth frames have the overlapping relationship, the calculation formula is very complicated and causes a large processing load (for example, arithmetic operation amount), but in Fig. 4, the calculation formula is illustrated by omitting a portion to be approximated to zero and omitted. For example, in the calculation of the total reach R3 of the third frame, the calculation formula is illustrated by approximating to zero and omitting the component of "P₁×P₂×P₃×K_{1·2·3}". This makes it possible to calculate (acquire) the scale of the number of persons who contact information (reach) of the first to fifth frames with high accuracy and a small processing load (for example, arithmetic operation amount).

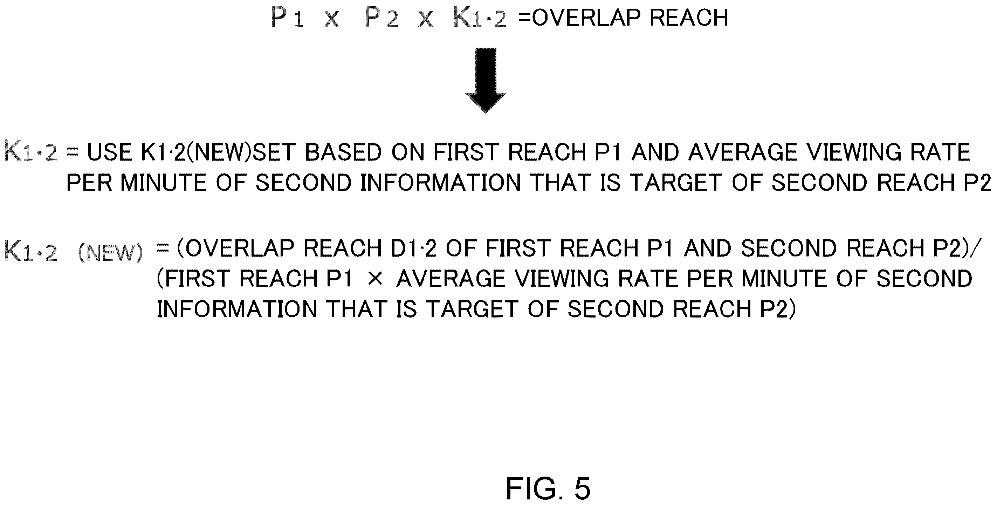

Next, a method of setting the predicted overlap coefficient used when calculating (acquiring) the overlap reach will be described in detail with reference to Fig. 5.

In the example of Fig. 4, as the component (overlap reach) in which the m-th reach Pₘ and the n-th reach Pₙ that are the combination of any two of the reaches P₁ to P₅ of the first to fifth frames have the overlapping relationship, the value obtained by multiplying the m-th reach Pₘ, the n-th reach Pₙ, and the predicted overlap coefficient K_{m·n} (K_{m·n (NEW)}) uniquely set for each combination of the m-th reach Pₘ and the n-th reach Pₙ is calculated. In the example of Fig. 5, assuming that m=1 and n=2, a value obtained by multiplying the reach P₁ of the first frame, the reach P₂ of the second frame, and a predicted overlap coefficient K_{1·2} set for a combination of the reach P₁ of the first frame and the reach P₂ of the second frame is calculated (P₁×P₂×K_{1·2}). This alone can be said to be a past method for overlap reach calculation that is generally performed in the related art.

In the present disclosure, in view of higher accuracy of future prediction and the like, the predicted overlap coefficient K_{1·2} is developed and sublimated to the predicted overlap coefficient K_{1·2(NEW)}, and the predicted overlap coefficient K_{1·2(NEW)} uniquely set for each combination of the reach P₁ of the first frame and the reach P₂ of the second frame is used. In Fig. 4, "Pₘ×Pₙ×K_{m·n}" is indicated in a simplified manner for the purpose of simplifying the mathematical formula, but it is assumed that the predicted overlap coefficient K_{m·n (NEW)} described below is used.

Here, the predicted overlap coefficient K_{1·2(NEW)} is set based on the reach P₁ of the first frame (the first reach) and the average viewing rate per minute of the information (the second information) of the second frame that is a target of the reach P₂ of the second frame (the second reach). More specifically, the predicted overlap coefficient K_{1·2(NEW)} is set to a value obtained by dividing the overlap reach D_{1·2} of the reach P₁ of the first frame (the first reach) and the reach P₂ of the second frame (the second reach) by the multiplication value of the reach P₁ of the first frame (the first reach) and the average viewing rate per minute of the information of the second frame (the second information) that is the target of the reach P₂ of the second frame (the second reach). By using the predicted overlap coefficient K_{1·2(NEW)} set in this manner, it is possible to calculate (acquire) the scale of the number of persons who contact information (reach) of the first and second frames with high accuracy and a small processing load (for example, arithmetic operation amount).

More specifically, for example, the reach P₁ of the first frame (the first reach) is acquired, for example, as a reach of a person who views a station A for a specific time during the time period from 5:00 to 5:59 on Monday, and is characterized by being based on an arbitrarily set viewer determination condition common to the calculation of the predicted overlap coefficient K_{1·2 (NEW)}. In this "arbitrarily set viewer determination condition", for example, the reach and overlap of persons who view intermittently for one third of 60 minutes (that is, 20 minutes) may be calculated. Note that the coefficient value of 1/3 mentioned here is an example, and an appropriate condition may be changed depending on the age or sex set for the target. By adding the "arbitrarily set viewer determination condition", it is possible to contribute to the calculation of the optimum predicted overlap coefficient K_{1·2 (NEW)} in consideration of the ratio of overlapping persons between different time zones and broadcasting stations. In addition, the average viewing rate per minute of the information of the second frame (the second information) that is the target of the reach P₂ of the second frame (the second reach) is acquired, for example, as the average viewing rate per minute of the station B during 60 minutes from 6:00 to 6:59 on Tuesday, and is characterized by being a common index widely used in the advertisement market. Although the two are different in terms of arbitrariness, the predicted overlap coefficient K_{1·2 (NEW)} is set to the value obtained by dividing the overlap reach D_{1·2} of the reach P₁ of the first frame (the first reach) and the reach P₂ of the second frame (the second reach) by the multiplication value of the reach P₁ of the first frame (the first reach) and the average viewing rate per minute of the information of the second frame (the second information) that is the target of the reach P₂ of the second frame (the second reach), thereby further making it possible to acquire the scale of the number of persons who contact the information (reach) of the first frame (the first information) and the information of the second frame (the second information) with higher accuracy and a smaller processing load (for example, arithmetic operation amount).

At least one of the overlap reach D_{1·2} of the reach P₁ of the first frame (the first reach) and the reach P₂ of the second frame (the second reach), the reach P₁ of the first frame (the first reach), and the average viewing rate per minute of the information of the second frame (the second information) that is the target of the reach P₂ of the second frame (the second reach) can be obtained based on a people meter for individual data.

The people meter for individual data refers to a measuring machine used by a viewing rate research company for an individual viewing rate survey, and is sometimes referred to as a people meter (PM). The people meter for individual data is installed in the house of an individual who accepts cooperation for the survey, and measures the viewing status of up to eight televisions in a household. By pressing a remote controller button with the measuring machine to input individual data at each television viewing, it is possible to record who in the family views which program (broadcasting station) and when. As a result, the household viewing rate and the individual viewing rate are collected in one survey, and the television utilization rate can also be recorded at the same time.

In the calculation of each index based on the people meter for individual data, the reach results of "day of week ×24 h" on a specific week (Monday to Sunday) × "station (for example, five stations)" can be used. In addition, the operation of the predicted overlap coefficient K_{m·n (NEW)} can be flexibly handled in accordance with a buying condition such as "last four weeks", "four-week average (number conversion)", and "same period of the previous year". Furthermore, the reach results can be calculated based on a time point actual (C) instead of a program average (P) in view of the trend of transaction conditions of an advertiser.

Note that, in the setting and use of the predicted overlap coefficient K_{m·n (NEW)}, and in the calculation of the total reach, it is also possible to consider (subtract) a component related to two or three or more combinations including a reach with the smaller number of the m-th frame and the n-th frame, and ignore (approximate to zero) a component related to two or three or more combinations including a reach with the larger number of the m-th frame and the n-th frame.

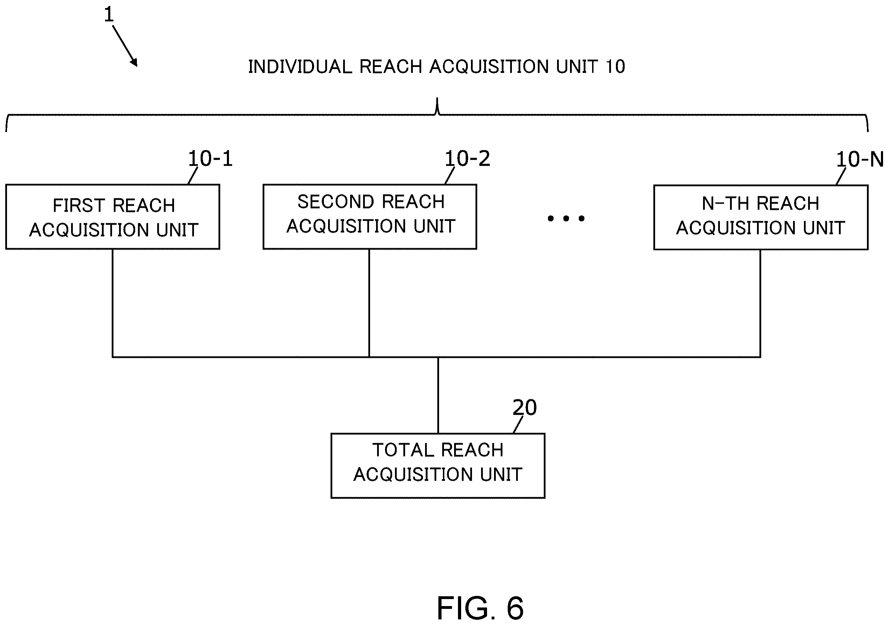

Fig. 6 is a block diagram illustrating an example of a configuration of an information processing apparatus 1.

The information processing apparatus 1 includes a first reach acquisition unit 10-1 that acquires the first reach that is the scale of the number of persons who contact the first information, a second reach acquisition unit 10-2 that acquires the second reach that is the scale of the number of persons who contact the second information, ... and an N-th reach acquisition unit 10-N that acquires the N-th reach that is the scale of the number of persons who contact the N-th information. The first reach acquisition unit 10-1, the second reach acquisition unit 10-2,... and the N-th reach acquisition unit 10-N constitute an individual reach acquisition unit 10. The individual reach acquisition unit 10 acquires the first reach that is the scale of the number of persons who contact the first information, the second reach that is the scale of the number of persons who contact the second information, ... and the N-th reach that is the scale of the number of persons who contact the N-th information, where N is defined as a natural number of three or more.

The information processing apparatus 1 includes a total reach acquisition unit 20. The total reach acquisition unit 20 acquires the total reach that is the union of the first reach, the second reach,... and the N-th reach acquired by the individual reach acquisition unit 10 (the first reach acquisition unit 10-1, the second reach acquisition unit 10-2,... and the N-th reach acquisition unit 10-N).

The total reach acquisition unit 20 considers (subtracts) the component in which two of the first to N-th reaches have the overlapping relationship, while ignoring (approximating to zero) the component in which three or more reaches have the overlapping relationship, as the incremental reach that is the scale of the number of persons who do not contact one information and contact the other information.

The total reach acquisition unit 20 calculates, as the component in which the m-th reach Pₘ and the n-th reach Pₙ that are a combination of any two of the first to N-th reaches have the overlapping relationship, the value obtained by multiplying the m-th reach Pₘ, the n-th reach Pₙ, and the predicted overlap coefficient K_{m·n(NEW)} uniquely set for each combination of the m-th reach Pₘ and the n-th reach Pₙ. Here, m and n are constituted by a combination of two non-overlapping natural numbers of 1 to N.

The predicted overlap coefficient K_{m·n (NEW)} is set based on the m-th reach Pₘ and the average viewing rate per minute of the n-th information that is the target of the n-th reach Pₙ. More specifically, the predicted overlap coefficient K_{m·n (NEW)} is set to the value obtained by dividing the overlap reach D_{m·n} of the m-th reach Pₘ and the n-th reach Pₙ by the multiplication value of the m-th reach Pₘ and the average viewing rate per minute of the n-th information.

At least one of the overlap reach D_{m·n}, the m-th reach Pₘ, and the average viewing rate per minute of the n-th information may be obtained based on the people meter for individual data.

The information processing apparatus, the information processing method, and the information processing program of the present disclosure acquire the first reach that is the scale of the number of persons who contact the first information, the second reach that is the scale of the number of persons who contact the second information, ... and the N-th reach that is the scale of the number of persons who contact the N-th information, and acquire the total reach that is the union of the first reach, the second reach,... and the N-th reach, where N is defined as a natural number of three or more. When the total reach is acquired, the component in which two of the first to N-th reaches have the overlapping relationship is considered, while the component in which three or more reaches have the overlapping relationship is ignored, as the incremental reach that is the scale of the number of persons who do not contact one information and contact the other information. This makes it possible to acquire the scale of the number of persons who contact information (reach) with high accuracy and a small processing load (for example, arithmetic operation amount).

As a method for acquiring the total reach as a comparative example, for example, it is conceivable to count the people meter for individual data based on broadcast time point information, count unique contact viewing, and perform viewing prediction at that time point at the individual data level. However, there are tendencies (disadvantages) that the prediction accuracy is low, the data amount is large, and the arithmetic operation amount is large.

In addition, as another method for acquiring the total reach, calculation based on the viewing rate and the Metheringham coefficient is conceivable. However, the calculation load of the Metheringham coefficient is large, and the coarse granularity and update frequency are disadvantages. In addition, homogenization (difference in the viewing rate) due to the Metheringham coefficient being a constant coefficient is also a technical problem.

As a further comparative example, when obtaining the overlap reach of a reach A' and a reach B', it is conceivable to perform weighted averaging on the viewing rate and the overlap coefficient of an integrated reach for past broadcasting for the multiplication value of the reach A' and the reach B', and treat the results as a program (information) A'. In this case, not only the overlap reach of the reach A' and the reach B' but also three or more overlap reaches are considered. In this comparative example, as a result of the viewing rate (reach) of the program (information) A' increasing as the number of commercials increases, there is a case where overlapping is more likely to occur deviating from an environment (the viewing rate of%) at the time of calculating the overlap coefficient, and the overlap reach becomes larger than the reach B', causing a logic failure. In particular, line drawing in the same time zone, a midnight with a high overlap ratio, and adjacent time zones pose risks.

As a further comparative example, when obtaining the overlap reach of a reach A" and a reach B", it is conceivable to add a weighted average value of an overlap ratio for past broadcasting to the reach B." In this case, since the overlap ratio of the reach B'' is calculated at a ratio relative to an environment at the time of the single program (several % of viewing rate) while the viewing rate (reach) of the program (information) A" increases as the number of commercials increases, a "state where the incremental reach is high" is accumulated. As a result, there are many cases where the reach is calculated higher than the actual one. In particular, a time zone with a small overlap ratio poses a risk.

On the other hand, in the method of the present disclosure, the incremental reach to be added is calculated for each of the past incremental reaches and added, and the component in which two reaches have the overlapping relationship is considered and subtracted, while the component in which three or more reaches have the overlapping relationship is ignored and approximated to zero. In this case, since the incremental reach (added viewing rate) of each program decreases as the number of commercials increases, it is possible to prevent a situation in which overlapping is excessively integrated and the reach is more likely to excessively increase, and a situation in which the overlap reach becomes too large, causing a logic failure. As a result, it is possible to acquire the scale of the number of persons who contact information (reach) with high accuracy and a small processing load (for example, arithmetic operation amount).

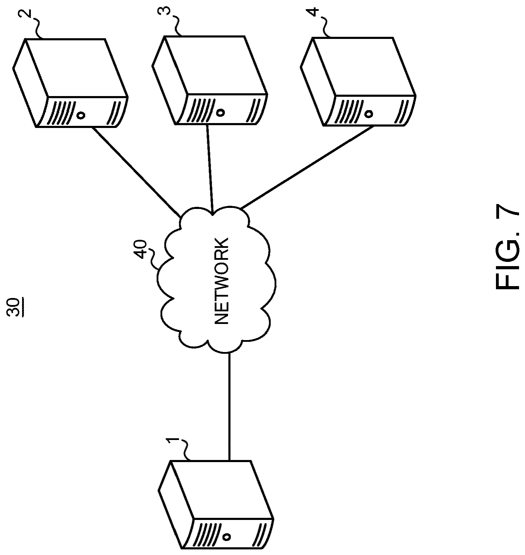

Fig. 7 is a diagram illustrating an example of a schematic configuration of a system 30 including the information processing apparatus 1. The system 30 includes the information processing apparatus 1, a cost calculation apparatus 2, a broadcasting distribution apparatus 3, and a viewing rate prediction apparatus 4. The information processing apparatus 1, the cost calculation apparatus 2, the broadcasting distribution apparatus 3, and the viewing rate prediction apparatus 4 are communicably connected to each other via a network 40.

The cost calculation apparatus 2 calculates, for example, the cost of the television commercial. The cost calculation apparatus 2 calculates the cost of the television commercial based on a calculation formula including the viewing rate (predicted viewing rate) of a target program into which the television commercial is inserted.

The cost calculation apparatus 2 acquires, for example, a cost for each publication pattern of a spot commercial in a predetermined period (for example, one week) of a certain broadcasting station (which may be replaced as a channel). Here, the cost in the present disclosure may mean cost per rating indicating a fee per TRP (Target Rating Point) (1%) of the viewing rate. Alternatively, the cost in the present disclosure may mean cost per rating indicating a fee per GRP (Gross Rating Point) (1%) of the viewing rate. The publication pattern may include an existing (arbitrary) publication pattern (for example, inverted L type, a whole day type, a figure 3 type, a backward C type, a bar type, a midnight type, an all-day daytime type, and the like). In addition, the cost calculation apparatus 2 may acquire a cost for each publication pattern, a time zone configuring the publication pattern, and the like based on an input (for example, setting by the broadcasting station) from the outside.

The cost calculation apparatus 2 may acquire (for example, receive) information for the cost calculation. For example, the cost calculation apparatus 2 may acquire (receive) viewing rate information (for example, it may be referred to as a household viewing rate, an individual viewing rate, an individual overall viewing rate, a viewing rate ("All&P+C7 (Program + Commercial 7)" or the like) obtained by adding real-time viewing and time shift viewing up to a seventh day after broadcast, and the like.) regarding each advertisement frame from the viewing rate prediction apparatus 4. The cost calculation apparatus 2 may derive the cost of the A time 1 frame based on, for example, the setting of the unit price of one A time by the broadcast station and the information of the viewing rate acquired from the viewing rate prediction apparatus 4.

The cost calculation apparatus 2 may be a mobile terminal (mobile communication terminal) such as a mobile phone, a smartphone, or a tablet terminal, or may be a fixed communication terminal such as a personal computer (PC) or a server. That is, the cost calculation apparatus 2 in the present disclosure can be replaced with a communication apparatus. Furthermore, the cost calculation apparatus 2 may communicate with a network (such as the Internet) in a wired and/or wireless manner (for example, long term evolution (LTE), new radio (NR), Wi-Fi (registered trademark), or the like).

The broadcasting distribution apparatus 3 is an apparatus that distributes broadcasting to a television (TV). Here, the television (television receiver) may be an apparatus having a function of receiving at least one of terrestrial broadcasting, broadcasting by broadcasting satellite (BS)/communications satellite (CS), Internet broadcasting (Internet television), and the like. For example, the television may be a multi-function television, a smart TV, an Internet protocol (IP) TV, a set-top box, and the like. Note that broadcasting means transmission of electric communication intended to be directly received by the public, and may include wireless broadcast, Internet broadcast, and the like.

The viewing rate prediction apparatus 4 is an apparatus that aggregates actual viewing rates of programs broadcast on televisions. In addition, the viewing rate prediction apparatus 4 is an apparatus that predicts the viewing rate of the program (target program) to be broadcast on the television. The viewing rate may be stored in a predetermined time unit (for example, seconds, minutes, and hours). The viewing rate prediction apparatus 4 may transmit information regarding the viewing rate (for example, the viewing rate (predicted viewing rate) of the target program into which the television commercial is inserted) to another apparatus (for example, the cost calculation apparatus 2) via the network.

The viewing rate prediction apparatus 4 may be, for example, an apparatus managed by a television viewing rate researcher. The viewing rate prediction apparatus 4 may acquire and manage data of a viewing history from a measuring device connected to a television of a predetermined household (for example, a research cooperation household). Note that the viewing rate may be calculated or predicted from the data. In the viewing rate prediction apparatus 4, the viewing rate (individual viewing rate of the target) for each predetermined target (a user corresponding to a predetermined attribute) may be stored. In the present disclosure, the target is assumed to be gender/age classification (a C (Child) group, a T (Teen) group, an M (Male) 1-M3 group, and an F (Female) 1-F3 group) used in the field of marketing, but the present disclosure is not limited to such classification.

The viewing rate prediction apparatus 4 is configured to be able to predict an "advertisement viewing rate of a viewer" of the television with high accuracy using a new analysis method of handling big data. The viewing rate prediction apparatus 4 can include a data input unit that inputs data source information, an explanatory variable conversion unit that performs specific processing on the data source information input from the data input unit to convert the data source information into an explanatory variable, a program implementation/execution unit that implements a program of a predetermined algorithm, and a data output unit that outputs a result by the program implementation/execution unit. It is possible to execute an algorithm of a program in which the program implementation/execution unit is implemented by using the data source information input from the data input unit and the explanatory variable obtained by the explanatory variable conversion by the explanatory variable conversion unit, output predicted viewing rate data obtained by executing the algorithm from the output unit, and optimize an advertisement space based on the output predicted viewing rate data. Here, a viewing rate of a related program (for example, the broadcast before the previous time of the serial drama, the broadcast before the previous time of the special program, and the like) related to the target program can be used as the data source information for calculating the viewing rate (predicted viewing rate) of the target program into which the television commercial is inserted.

Note that the system configuration is an example, and the present disclosure is not limited thereto. For example, one apparatus is included for each type of the apparatus in Fig. 7, but the number of devices is not limited thereto, and a plurality of devices may be provided. The system 30 may be configured not to include some apparatuses, or may be configured such that a function of one apparatus is implemented by a plurality of apparatuses. Conversely, functions of the plurality of apparatuses may be implemented by one apparatus. For example, at least two of the information processing apparatus 1, the cost calculation apparatus 2, the broadcasting distribution apparatus 3, and the viewing rate prediction apparatus 4 may be implemented on one server.

Note that the present disclosure also covers a content in which the "viewing rate" is replaced with a specific index (or a degree of improvement, an offset, and the like in a specific index). The specific index may be an index for determining an advertisement effect, an intermediate index for improving key performance indicators (KPIs) of an advertiser, or the like, and may include, for example, a recognition rate, reach, return on advertising spend (ROAS), return on investment (ROI), or the like. At least a part of the description "viewing rate" may be replaced with any of the above-described specific indices.

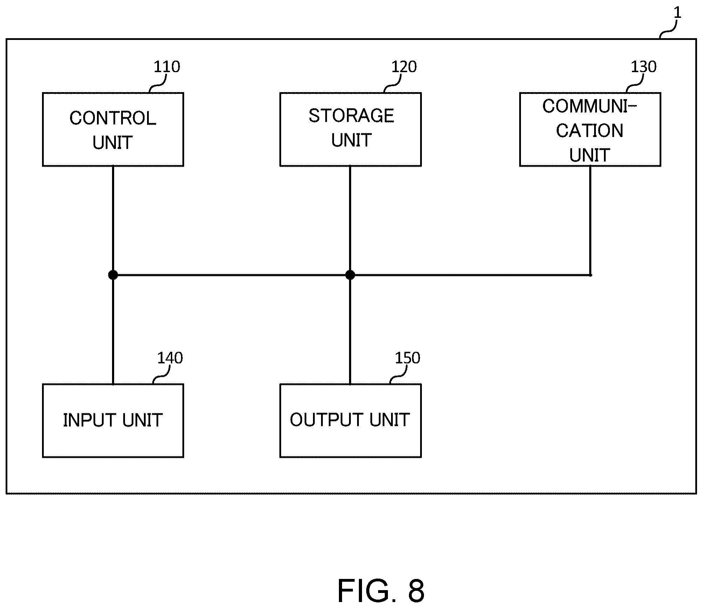

Fig. 8 is a diagram illustrating an example of a functional configuration of the information processing apparatus 1. As illustrated in Fig. 8, the information processing apparatus 1 includes a control unit 110, a storage unit 120, a communication unit 130, an input unit 140, and an output unit 150. Note that Fig. 8 illustrates an example of functional blocks of the information processing apparatus 1, and the information processing apparatus 1 may include other functional blocks not illustrated in Fig. 8. In addition, a configuration not including some functional blocks may be employed.

The control unit 110 controls the information processing apparatus 1. The control unit 110 can be configured with a controller, a control circuit, or a control apparatus described based on common recognition in the technical field according to the present invention.

The storage unit 120 stores information used in the information processing apparatus 1. The storage unit 120 can be configured with, for example, a memory, a storage, a storage apparatus, and the like described based on common recognition in the technical field according to the present invention.

The communication unit 130 performs communication of the information processing apparatus 1 (for example, mutual communication between both sides). The communication unit 130 can be configured with a transmitter/receiver, a transmission/reception circuit, or a transmission/reception apparatus described based on common recognition in the technical field according to the present invention. Note that the communication unit 130 may include a transmission unit and a reception unit.

The input unit 140 receives input in the information processing apparatus 1. Furthermore, the input unit 140 may be connected to a predetermined device, storage medium, or the like and may receive an input of data. The input unit 140 may output, for example, an input result to the control unit 110. The input unit 140 can be configured with an input apparatus such as a keyboard, a mouse, a button, or the like, an input/output terminal, an input/output circuit, and the like described based on common recognition in the technical field according to the present invention. Furthermore, the input unit 140 may have a configuration integrated with a display unit (for example, a touch panel).

The output unit 150 performs output in the information processing apparatus 1. For example, the output unit 150 may include a display unit that displays an image, a voice output unit that outputs a voice, and the like. The display unit can be configured with, for example, a display apparatus such as a display, a monitor, or the like described based on common recognition in the technical field according to the present invention. Furthermore, the voice output unit can be configured with an output apparatus such as a speaker or the like described based on common recognition in the technical field according to the present invention.

Note that the block diagram used in the description of the above embodiment illustrates blocks in functional units. These functional blocks (components) are implemented by any combination of hardware and/or software. In addition, means for implementing each functional block is not particularly limited. That is, each functional block may be implemented by one physically coupled apparatus, or may be implemented by a plurality of apparatuses in which two or more physically separated apparatuses are connected to each other in a wired or wireless manner.

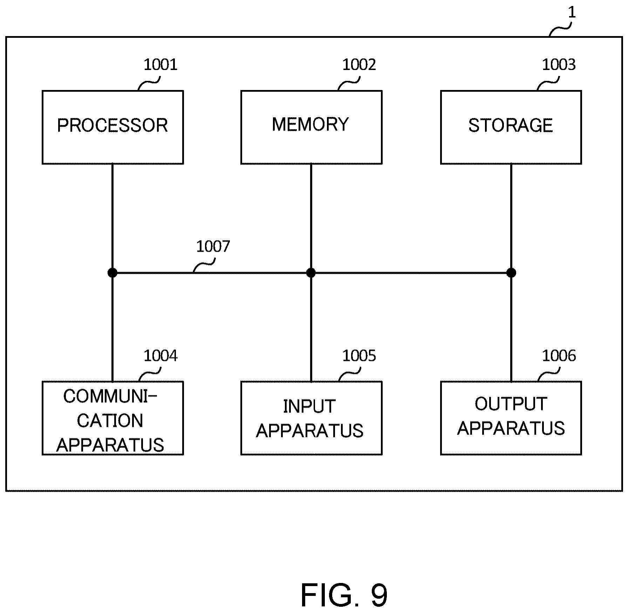

For example, the apparatus in the embodiment of the present disclosure (the information processing apparatus 1) may function as a computer that performs various types of information processing of the present disclosure. Fig. 9 is a diagram illustrating an example of a hardware configuration of the information processing apparatus 1. The information processing apparatus 1 described above may be physically configured as a computer device including a processor 1001, a memory 1002, a storage 1003, a communication apparatus 1004, an input apparatus 1005, an output apparatus 1006, a bus 1007, and the like.

Note that, in the present disclosure, an apparatus, a circuit, a device, a unit, a server, and the like can be replaced with each other. The hardware configuration of the information processing apparatus 1 may be configured to include one or a plurality of each apparatus illustrated in the drawing, or may be configured without including some apparatuses.

For example, although only one processor 1001 is illustrated, there may be a plurality of processors. Furthermore, the processing may be executed by one processor, or various types of processing may be executed simultaneously, sequentially, or using other methods by two or more processors. Note that the processor 1001 may be implemented by one or more chips.

Each function in the information processing apparatus 1 is implemented by causing predetermined software (program) to be loaded on hardware such as the processor 1001 and the memory 1002, so that the processor 1001 performs an arithmetic operation, and controls communication by the communication apparatus 1004, reading and/or writing of data in the memory 1002 and the storage 1003, and the like.

The processor 1001 operates, for example, an operating system to control the entire computer. The processor 1001 may be configured with a central processing unit (CPU) including an interface with a peripheral apparatus, a control apparatus, an arithmetic apparatus, a register, and the like. Note that each unit such as the above-described control unit 110 may be implemented by the processor 1001.

In addition, the processor 1001 reads a program (a program code), a software module, data, and the like from at least one of the storage 1003 and the communication apparatus 1004 to the memory 1002, and executes various types of processing according to the data. As the program, a program that causes a computer to execute at least a part of the operations described in the above-described embodiment is used. For example, the control unit 110 may be implemented by a control program stored in the memory 1002 and operated in the processor 1001, and other functional blocks may be similarly implemented.

The memory 1002 is a computer-readable storage medium, and may include, for example, at least one of a read only memory (ROM), an erasable programmable ROM (EPROM), an electrically EPROM (EEPROM), a random access memory (RAM), or another appropriate storage medium. The memory 1002 may be referred to as a register, a cache, a main memory (main storage apparatus), or the like. The memory 1002 may store a program (a program code), a software module, and the like that can be executed to implement the method according to the embodiment.

The storage 1003 is a computer-readable storage medium, and may be configured with, for example, at least one of a flexible disk, a floppy (registered trademark) disk, a magneto-optical disk (for example, a compact disc (such as a compact disc ROM (CD-ROM)), a digital versatile disc, or a Blu-ray (registered trademark) disc), a removable disk, a hard disk drive, a smart card, a flash memory device (for example, a card, a stick, or a key drive), a magnetic stripe, a database, a server, or another appropriate storage medium. The storage 1003 may be referred to as an auxiliary storage apparatus. Note that the above-described storage unit 120 may be implemented by the memory 1002 and/or the storage 1003.

The communication apparatus 1004 is hardware (transmission/reception device) for performing communication between computers via at least one of a wired network and a wireless network, and is also referred to as, for example, a network device, a network controller, a network card, a communication module, or the like. The communication apparatus 1004 may include a SIM card. Note that the above-described communication unit 130 may be implemented by the communication apparatus 1004.

The input apparatus 1005 is an input device (for example, a keyboard, a mouse, and the like) that receives an input from the outside. The output apparatus 1006 is an output device (for example, a display, a speaker, and the like) that performs output to the outside. Note that the input apparatus 1005 and the output apparatus 1006 may be configured integrally (for example, a touch panel). Note that the input unit 140 and the output unit 150 described above may be implemented by the input apparatus 1005 and the output apparatus 1006, respectively.

In addition, the respective apparatuses such as the processor 1001 and the memory 1002 are connected to each other by a bus 1008 for communicating information. The bus 1007 may be configured with a single bus or may be configured with different buses between apparatuses.

In addition, the information processing apparatus 1 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of the above-described hardware.

### (Modification)

Note that the terms described in the present disclosure and/or terms necessary for understanding the present disclosure may be replaced with terms having the same or similar meanings.

The information, the parameter, and the like described in the present disclosure may be represented by using an absolute value, may be represented by using a relative value from a predetermined value, or may be represented by using another piece of corresponding information. In addition, names used for parameters and the like in the present disclosure are not limited in any respect.

The information, signals, and the like described in the present disclosure may be represented using any one of a variety of different technologies. For example, data, instructions, commands, information, signals, bits, symbols, chips, and the like that may be mentioned throughout the above description may be represented by voltages, currents, electromagnetic waves, magnetic fields or particles, optical fields or photons, or any combination thereof.

The information, the signals, and the like may be input and output via a plurality of network nodes. The input/output information, signals, and the like may be stored in a specific location (for example, a memory) or may be managed using a table. The input/output information, signals, and the like can be overwritten, updated, or added. The output information, signals, and the like may be deleted. The input information, signals, and the like may be transmitted to another apparatus.

Furthermore, notification of predetermined information (for example, notification of "being X") is not limited to explicit notification, and may be performed implicitly (for example, by not notifying the predetermined information or by notifying another piece of information).

Software, whether referred to as software, firmware, middleware, microcode, hardware description language, or other names, should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

Software, an instruction, information, and the like may be transmitted and received via at least one of a transmission medium and a signal waveform. For example, when software is transmitted from a website, a server, or other remote sources using at least one of a wired technology (a coaxial cable, an optical fiber cable, a twisted pair, a digital subscriber line (DSL), or the like) and a wireless technology (an infrared ray, a microwave, and the like), at least one of the wired and wireless technologies is included within the definition of the transmission medium.

The terms "system" and "network" used in the present disclosure may be used interchangeably.

Each aspect/embodiment described in the present disclosure may be used alone, may be used in combination, or may be switched in execution. In addition, the order of the processing procedure, sequence, flowchart, and the like of each aspect/embodiment described in the present disclosure may be changed as long as there is no contradiction. For example, for the methods described in the present disclosure, elements of various steps are presented using an exemplary order, and are not limited to the presented specific order.

As used in the present disclosure, the description "based on" does not mean "based only on" unless explicitly stated otherwise. In other words, the description "based on" means both "based only on" and "based at least on".

Any reference to elements using designations such as "first", "second", and the like as used in the present disclosure does not generally limit the amount or order of the elements. Such designations may be used in the present disclosure as a convenient way to distinguish between two or more elements. Thus, references to the first and second elements do not imply that only two elements may be employed or that the first element must in any way precede the second element.

When the present disclosure uses the terms "include", "including", and variations thereof, such terms are intended to be inclusive in a manner similar to the term "comprising". Furthermore, the term "or" used in the present disclosure is intended not to be an exclusive OR.

In the present disclosure, for example, when articles such as a, an, and the in English are added by translation, the present disclosure may include a case in which a noun following such articles is a plural form.

Although the invention according to the present disclosure has been described in detail above, it is apparent to those skilled in the art that the invention according to the present disclosure is not limited to the embodiment described in the present disclosure. The invention according to the present disclosure can be implemented as modifications and variations without departing from the spirit and scope of the invention defined based on the description of the claims. Therefore, the description of the present disclosure is for the purpose of illustration and does not bring any restrictive meaning to the invention according to the present disclosure.

The present application is based on Japanese Patent Application No. 2023-026019 filed on February 22, 2023. All contents are included herein.

## Claims

1. An information processing apparatus comprising:
an individual reach acquisition unit that acquires a first reach that is a scale of the number of persons who contact first information, a second reach that is a scale of the number of persons who contact second information,... and an N-th reach that is a scale of the number of persons who contact N-th information, when N is defined as a natural number of three or more; and
a total reach acquisition unit that acquires a total reach that is a union of the first reach, the second reach,... and the N-th reach, wherein
the total reach acquisition unit considers a component in which two of the first to N-th reaches have an overlapping relationship, while ignoring a component in which three or more reaches have an overlapping relationship, as an incremental reach that is a scale of the number of persons who do not contact one information and contact the other information.

2. The information processing apparatus according to claim 1, wherein
the total reach acquisition unit calculates, as a component in which an m-th reach Pₘ and an n-th reach Pₙ that are a combination of any two of the first to N-th reaches have an overlapping relationship, a value obtained by multiplying the m-th reach Pₘ, the n-th reach Pₙ, and a predicted overlap coefficient K_{m·n(NEW)} uniquely set for each combination of the m-th reach Pₘ and the n-th reach Pₙ.

3. The information processing apparatus according to claim 2, wherein
the predicted overlap coefficient K_{m·n (NEW)} is set based on the m-th reach Pₘ and an average viewing rate per minute of n-th information that is a target of the n-th reach Pₙ.

4. The information processing apparatus according to claim 3, wherein
the predicted overlap coefficient K_{m·n (NEW)} is set to a value obtained by dividing an overlap reach D_{m·n} of the m-th reach Pₘ and the n-th reach Pₙ by a multiplication value of the m-th reach Pₘ and an average viewing rate per minute of the n-th information.

5. The information processing apparatus according to claim 4, wherein
at least one of the overlap reach D_{m·n}, the m-th reach Pₘ, and the average viewing rate per minute of the n-th information is obtained based on a people meter for individual data.

6. An information processing method, wherein the method comprises computer-executed steps, the steps including:
an individual reach acquisition step of acquiring a first reach that is a scale of the number of persons who contact first information, a second reach that is a scale of the number of persons who contact second information,... and an N-th reach that is a scale of the number of persons who contact N-th information, when N is defined as a natural number of three or more; and
a total reach acquisition step of acquiring a total reach that is a union of the first reach, the second reach,... and the N-th reach, wherein
the total reach acquisition step considers a component in which two of the first to N-th reaches have an overlapping relationship, while ignoring a component in which three or more reaches have an overlapping relationship, as an incremental reach that is a scale of the number of persons who do not contact one information and contact the other information.

7. An information processing program, wherein the program causes a computer to execute each of steps, the steps including:
an individual reach acquisition step of acquiring a first reach that is a scale of the number of persons who contact first information, a second reach that is a scale of the number of persons who contact second information,... and an N-th reach that is a scale of the number of persons who contact N-th information, when N is defined as a natural number of three or more; and
a total reach acquisition step of acquiring a total reach that is a union of the first reach, the second reach,... and the N-th reach, wherein
the total reach acquisition step considers a component in which two of the first to N-th reaches have an overlapping relationship, while ignoring a component in which three or more reaches have an overlapping relationship, as an incremental reach that is a scale of the number of persons who do not contact one information and contact the other information.
